# EUROPEAN PATENT APPLICATION

(11) **EP 2 818 455 A1**
(43) Date of publication of application: **31.12.2014**
(21) Application number: 14173565.4
(22) Date of filing: 23.06.2014
(51) Int. Cl.: C04B 35/10, C04B 33/132, C04B 33/24

(54) **Material for making ceramic and ceramic artifacts and method for preparing said material**

(30) Priority: 24.06.2013 IT MI20131042
(71) Applicant: Raffmetal S.p.A., 25070 Casto (IT); Minerali Industriali S.r.l., 28100 Novara (IT)
(72) Inventor: Fontanella, Marco, 25087 Salò (IT); Salvaia, Eugenio, 10040 Almese (IT); Niboli, Orlando, 25083 Gardone Riviera (IT); Niboli, Roberta, 25083 Gardone Riviera (IT); Pavese, Alessandro, 10143 Torino (IT)
(74) Representative: Cernuzzi, Daniele

(57) **Abstract**

The invention provides a material for making ceramic and ceramic artifacts, in particular for making ceramic sanitaryware, containing a residue of the processing of the furnace slag of secondary aluminum, and specifically the by-product of the processing of the salt slag produced in the melting of the secondary aluminum; the material of the invention is used in a ceramic mixture for making ceramic and ceramic artifacts to replace traditional raw materials, such as chamotte and/or quartz.

## Description

The present invention relates to a material for making ceramic and ceramic artifacts, in particular for making ceramic sanitaryware, and to a method for obtaining such a material.

As known, ceramic is an inorganic compound material, usually constituted by a mixture of clays and other substances which is modeled and then consolidated by means of firing processes.

In addition to artistic uses, ceramic has many industrial applications, in particular in the building sector (in which it is used to make various building or covering elements), in the sanitaryware sector and in the sector of linings for industrial apparatuses operating at high temperatures.

In particular, in the sector of ceramic sanitaryware artifacts made by means of the so-called "fire-clay" process, it is known to make mixtures which include quartz and chamotte (calcined kaolin, powder obtained from the grinding of previously fired ceramic), in addition to clays and/or similar materials.

The use of traditional raw materials has, in all cases, drawbacks in terms of costs and process complexity.

In particular, chamotte requires high treatment temperatures (higher than 1400°C) and is affected by high variability (according to the procurement sources); quartz has a high environmental impact, requiring mining, and is harmful to the health of operators, unless specific safety measures are adopted.

It is an object of the present invention to provide a material for making ceramic and ceramic artifacts, in particular for making ceramic sanitaryware, which is free from the drawbacks of the prior art; in particular, it is an object of the invention to replace at least some of the raw materials of the ceramic compositions with an alternative, recovering material.

The present invention thus relates to a material for making ceramic and ceramic artifacts, in particular for making ceramic sanitaryware, and to a method for obtaining such a material, as defined in essential terms in the accompanying claims 1 and 11, respectively, and, for the preferred additional features in the dependent claims.

The invention thus supplies materials to be used as secondary raw materials in the production of ceramic and ceramic artifacts, in particular in the sanitaryware sector, but also for building elements (tiles) and refractory lining, to replace traditional raw materials, such as, for example, chamotte and/or quartz (for the sanitaryware sector).

The materials of the invention allow to preserve the properties of the end product (ceramic and ceramic products) with respect to traditional raw materials; they ensure the possibility of processing ceramic at temperatures not higher, or even lower, than those needed for traditional raw materials; they can be made in relatively simple, cost-effective manner, in particular not requiring excessively high processing temperatures.

The material of the invention firstly contains waste alumina powder, constituted by the by-product of the processing of the secondary aluminum (aluminum obtained from recycling, not from raw mineral), and specifically from the by-product of the processing of the salt slag produced in the melting of the secondary aluminum.

As known, furnace slag and salt slag are produced in the secondary aluminum melting processes from which, after having collected the salt slag, a sludge is obtained, which, once dried, appears as a powdery solid.

This material is generally indicated as residue of the processing of the furnace slag of the secondary aluminum, and is defined as "alumina powder" or "waste alumina" (EWC 10.03.05) in the European Waste Catalogue; hereinafter, it will be indicated as "residue of the processing of the furnace slag of secondary aluminum" or simply "waste alumina". An example of this material is marketed under the brand name of Rapal 01.

Substantially, the residue of the processing of the furnace slag of secondary aluminum is obtained from furnace salt slag of the secondary aluminum, from which the salts (chlorides) are removed to obtain residual contents less than 0.2% (dry on dry), and having a humidity content less than 30%.

The residue of the processing of the furnace slag of secondary aluminum is constituted mostly by alumina powder (Al2O3, aluminum oxide), which constitutes the main component (present in higher amounts that the other components, normally higher than 60-65% by weight on dry), and contains other metallic oxides, such as mainly magnesium (MgO), silicon (SiO2), iron (Fe2O3) and calcium (CaO) oxides, in addition to chlorides and other impurities (the main being metals, such as aluminum, potassium, sodium, chromium, manganese, copper, titanium, zinc).

For the application of concern of the present invention, the residue of the processing of the furnace slag of secondary aluminum contains silico-aluminates in particular.

The main phases constituting the residue of the processing of the furnace slag (waste alumina) are indicatively the following (expressed in percentages by weight; the percentages differ according to the treatments to which the material is subjected):
- spinel: 20-40%
- corundum: 2-4%
- bayerite: 2-6%
- calcite: 1-2%
- amorphous: 50-70%

According to the invention, the residue of the processing of the furnace slag of secondary aluminum or waste alumina is used as raw (secondary, i.e. recycled) material in the preparation of ceramic mixtures for making ceramic, in particular for ceramic sanitaryware.

The material of the invention has good castability properties and a low tendency to form surface defects, these properties being needed to make the ceramic, above all in the sanitaryware sector, but also in the building and refractory lining sectors.

Preferably, but not necessarily, the waste alumina used according to the present invention has a granulometry less than 500 µm, preferably less than 250 µm, and more preferably less than approximately 150 µm.

In this manner, the onset of undesired coloring in the ceramic is avoided and casting of the materials is favored and a significant fraction of the initial material may be used in all cases.

In a preferred embodiment, the material of the invention consists in the residue of the processing of the furnace slag of secondary aluminum (waste alumina) only, without glass fillers.

In a different embodiment, instead, the material of the invention may also include glass fillers, in particular recycled or recovered glass, in addition to waste alumina, optionally in addition to other fillers, such as dolomite and/or corrective additives (clays, talcum etc.).

The glass filler is, for example, recycled or recovered glass, having the following compositions in phase and in oxides:
composition in phases (percentages by weight):
   - corundum: 1-5%
   - anorthite: 1-2%
   - cristobalite: 1-2%
   - glass: 90-96%
   - quartz: 1-3%
composition in oxides (percentages by weight):
   - SiO2 60-80%
   - Al2O3 1-3%
   - CaO 5-15%
   - MgO 1-3%
   - FeO 0-1%
   - Na2O 5-15%
   - K2O 0-3%
   - TiO2 0-1%
   - LOI 0-1%

The use of glass fillers together with the waste alumina implies a higher processing and controlling complexity, but significantly expands the flexibility in the formulation of the end products, being possible to operate on the glass content to modify the properties of the end product (ceramic) and of the respective manufacturing process. In particular, a higher content of glass filler lowers, in particular, the firing temperature of the subsequent ceramic making process (firing of the ceramic mixture in which the material of the invention is used, carried out by the ceramic manufacturer).

The material may contain from 0 to 50% by weight of glass filler.

Preferably, the waste alumina is used after having been subjected to a treatment which makes it particularly suited for use in the preparation of ceramic mixtures.

In particular, the material of the invention is prepared by means of a treatment process of the residue of the processing of the furnace slag of secondary aluminum which includes one or more of the following steps:
- a step of selecting the granulometry of the material, in particular for reducing the granulometry under a predetermined threshold, so as to obtain a material with granulometry less than 500 µm, preferably less than 250 µm, and more preferably less than 150 µm; the step of selecting the granulometry is carried out, for example, by means of an attriction process and subsequent process of sorting or screening by means of screw, or by drying and screening with wind separator;
- a step of removing magnetic minerals (deironing), in which the magnetic minerals (mainly, iron minerals), which are eliminated, are separated from the non-magnetic minerals, which remain in the material for the ceramic industry; the step of removing the magnetic materials is carried out, for example, by means of an electromagnetic separation process; preferably, the treated material has an active iron content less than approximately 500 ppm, and more preferably less than approximately 250 ppm;
- a step of compacting, for example by pressing or briquetting, to reduce the material into compact (sintered) aggregates;
- a step of thermal treatment, for example carried out in a furnace, in which the aggregate material (for example, in briquets) is subjected to firing, in particular at a temperature comprised between 1000°C and 1300°C, and preferably between 1100°C and 1250°C for 10-30 minutes times;
- a step of grinding (and possibly of control sieving or screening), in which the fired aggregates (for example, briquets) are reduced into granules of selected granulometry, in particular less than 250 µm.

The attriction process is carried out, for example, by means of a water-fed attriction cell, of the type commonly installed in sand treatment systems. This process is used, in general, to remove the clayey residues from the sands, separated by friction from the surface of the granules. In the specific case, the process is used to disaggregate any aggregates of the waste alumina, and thus to increase the fine fraction to prepare for the subsequent classification/screening process.

The screening process is carried out, for example, by means of a sorter screw of the required size (for example, 150 µm), or dry with a wind separator or other suitable means for separating the required granulometric fraction.

For example, it is possible to proceed, even without the attriction process, by means of dry screening in an appropriate sieve or wind separator.

The electromagnetic separation and deironing process is carried out, for example, by means of a magnetic roller onto which the material to be treated, fed from a hopper, falls; the material passes on the roller which turns at a given speed: the magnetic minerals are attracted by the roller and carried towards a collection tray, the non-magnetic materials pass on the roller which turns, continue to fall and are collected in another tray; alternatively, a magnetic grading machine may be used for deironing.

The purpose of the step of compacting is to allow a sintering process so that it is later possible (after the subsequent thermal treatment) to grind the product to obtain the most suitable granulometry for the ceramic application; and to allow the maximum surface-to-surface contact between particles which contribute to the reaction (the alumina powder and the glass filler, if present).

The step of thermal treatment in the selected temperature range ensures: castability of the material; reduction/elimination of disturbances of the ceramic product enameled surface; processability in conventional conditions, i.e. in the scope of standard industrial cycles (times, thermal curves and rheological management as production); retaining of physical properties compatible with the sanitaryware sector (before final grinding to obtain the granulometry required by ceramic manufacturers).

Furthermore, the firing and the screening carried out on the material of the invention allows to avoid the formation of defects on the enamel caused by the development of gas, during the subsequent ceramic manufacturing process.

Once prepared, the material of the invention appears in form of a particulate solid which may be used in the preparation of ceramic mixtures for making ceramic, to at least partially replace chamotte and/or of the quartz, together with other usual components of the ceramic mixture (clays, feldspar, quartz etc.).

Table I below shows, by way of non-limiting example only, the contents in mineral phase of some materials prepared according to the invention with different thermal treatment (firing) methods (cycles), and in particular with thermal treatment phases carried out at different temperatures (Tmax). In general, the step of thermal treatment includes at least one step of heating of the material from an initial temperature Tin (ambient temperature or initial temperature of the slag taken for the treatment) to a maximum treatment temperature Tmax; and a step of holding the maximum treatment temperature Tmax for a predetermined time.

Optionally, the thermal treatment includes: a first step of heating temperature from the initial temperature Tin to an intermediate temperature Tm; possibly, a first step of holding of the temperature Tm for a first predetermined time; a second step of heating from the temperature Tm to the maximum treatment temperature Tmax; a second step of holding the maximum treatment temperature Tmax for a second predetermined time.

A slow cooling of the material follows (in air, for example).

For experimental purposes, the following thermal treatment cycles were used (additional tests were then carried out by varying the heating gradients, the treatment temperatures and the permanence times):
Cycle A): heating from Tin to Tmax with 5-7°C/min gradient; holding at Tmax: 10 min.
Cycle B) : heating from Tin to Tm (700°C) with gradient of approximately 80°C/min; holding at Tm: 25 min; heating from Tm to Tmax with gradient of approximately 100°C/min; holding at Tm: 29 min.
Cycle C) : heating from Tin to Tm (700°C) with gradient of approximately 8°C/min; heating from Tm to Tmax with gradient of approximately 5°C/min; holding at Tmax: approximately 10 min.
Cycle D) : heating from Tin to Tm (700°C) with gradient of approximately 8°C/min; heating from Tm to Tmax with gradient of approximately 5°C/min; holding at Tmax: approximately 20 min.

**Table I**

| phases | Tmax = 1150°C cycle B | Tmax = 1200°C cycle A | Tmax = 1250°C cycle C | Tmax = 1300°C cycle C |
|---|---|---|---|---|
| Spinel | 54 | 53 | 63 | 66 |
| Corundum | 5 | 6 | 12 | 20 |
| Anorthite | 1 | 1 | 5 | 7 |
| Cristobalite | 0 | 0 | 0 | 1 |
| Bayerite | 0 | 0 | 0 | 0 |
| Calcite | 0 | 0 | 0 | 0 |
| Amorphous | 40 | 40 | 20 | 6 |

Table II shows the mineralogical phases for materials of the invention, in addition to the residue of the furnace slag of secondary aluminum, also with glass filler (recycled glass), again in function of the thermal treatment conditions.

**Table II**

| | +40% glass Tmax = 1150°C cycle A | +10% glass Tmax = 1220°C cycle D | +20% glass Tmax = 1220°C cycle D | +40% glass Tmax = 1220°C cycle D |
|---|---|---|---|---|
| spinel | 25 | 53 | 41 | 22 |
| corundum | 2 | 6 | 5 | 4 |
| cristobalite | 1 | 3 | 2 | 3 |
| anorthite | 19 | 12 | 19 | 25 |
| nepheline+ diopside | 9 | - | - | - |
| Amorphous | 44 | 26 | 33 | 44 |

It is finally apparent that further changes and variations may be made to the material for making ceramic and ceramic artifacts and to the respective manufacturing method described and illustrated herein without departing from the scope of protection of the accompanying claims.

## Claims

1. A material for making ceramic and ceramic artifacts, in particular for making ceramic sanitaryware, containing a residue of the processing of furnace slag of secondary aluminum obtained by a thermal treatment process at a temperature higher than approximately 1000°C of the furnace slag of secondary aluminum.

2. A material according to claim 1, wherein the residue of the processing of the furnace slag of secondary aluminum is the by-product of the processing of the secondary aluminum, and in particular is the by-product of the processing of the salt slag produced in the melting of secondary aluminum.

3. A material according to claim 1 or 2, containing alumina powder as a main component.

4. A material according to one of the preceding claims, containing silico-aluminate.

5. A material according to one of the preceding claims, having a granulometry less than 500 µm, preferably less than 250 µm and more preferably less than 150 µm.

6. A material according to one of the preceding claims, comprising, in addition to the residue of the processing of furnace slag of secondary aluminum, a glass filler, in particular recycled glass.

7. A material according to one of the preceding claims, having an amount of active iron less than about 500 ppm and preferably less than about 250 ppm.

8. A material according to one of the preceding claims, **characterized by** being fired.

9. A material according to one of the preceding claims, **characterized by** being compacted and/or sintered.

10. Use in a ceramic mixture for making ceramic and ceramic artifacts, in particular for making ceramic sanitaryware, of a material containing a residue of the processing of furnace slag of secondary aluminum.

11. A method for preparing a material for making ceramic and ceramic artifacts, in particular for making ceramic sanitaryware, comprising the steps of: recovering furnace slag of secondary aluminum, in particular salt slag produced in the melting of secondary aluminum; and subjecting said slag to a step of thermal treatment at a temperature of at least 1000°C, in particular comprised between 1000°C and 1300°C, and preferably between 1100°C and 1250°C, to remove salts from said salt slag and obtain a residue of the processing of furnace slag of secondary aluminum for use as a secondary raw material in a ceramic mixture.

12. A method according to claim 11, wherein chlorides are removed up to residual amount less than 0.2%.

13. A method according to claim 11 or 12, comprising a step of adding a glass filler, in particular recycled glass, to the residue of the processing of furnace slag of secondary aluminum.

14. A method according to one of claims 11 to 13, comprising a step of selecting the granulometry of the residue of the processing of furnace slag of secondary aluminum, in particular for reducing the granulometry below a preset threshold, so as to obtain a powder material having a granulometry less than 500 µm, preferably less than 250 µm and more preferably less than 150 µm.

15. A method according to one of claims 11 to 14, comprising a step of removing magnetic minerals or deironing, for example by means of an electromagnetic separation process.

16. A method according to one of claims 11 to 15, wherein the step of thermal treatment is carried out at a temperature comprised between 1000 °C, and 1300 °C, and preferably between 1100 °C and 1250 °C.

17. A method according to claim 16, comprising, before the step of thermal treatment, a step of compacting, for example by pressing or briquetting, for reducing the residue of the processing of furnace slag of secondary aluminum into compact and/or sintered aggregates; the step of thermal treatment comprising a firing process of said compact and/or sintered aggregates.

18. A method according to claim 17, comprising a step of grinding and an optional subsequent step of control sifting or sieving, in which the fired aggregates are reduced in granules with a selected granulometry, in particular less than 250 µm.
